# EUROPÄISCHE PATENTSCHRIFT

(11) **EP 0 930 202 B1**
(45) Veröffentlichungstag und Bekanntmachung des Hinweises auf die Patenterteilung: **16.03.2005**
(21) Anmeldenummer: 99100593.5
(22) Anmeldetag: 14.01.1999
(51) Int. Cl.: B60R 21/20, B60R 13/02

(54) **Innenverkleidungsteil, insbesondere für ein Kraftfahrzeug**
Interior trim panel, in particular for a motor vehicle
Elément de garniture intérieure, en particulier pour un véhicule automobile

(30) Priorität: 17.01.1998 DE 19801611
(43) Veröffentlichungstag der Anmeldung: 21.07.1999
(73) Patentinhaber: ADAM OPEL AG, 65423 Rüsselsheim (DE)
(72) Erfinder: Hug, Karl, 65439 Flörsheim (DE)
(74) Vertreter: Daniel, Ulrich W.P.

(56) Entgegenhaltungen:
- EP-A- 0 487 753
- DE-A- 19 651 532
- US-A- 5 527 574

## Beschreibung

Die Erfindung betrifft ein Innenverkleidungsteil, insbesondere für ein Kraftfahrzeug, welches im wesentlichen aus einer oberen Dekorschicht, einer elastischen bzw. nachgiebigen Zwischenschicht und einer formstabilen Trägerschicht besteht, wobei zum Markieren einer integral ausgebildeten Abdeckung für eine Airbag-Vorrichtung zumindest in der Trägerschicht eine Fuge, Schwächungslinie oder dergleichen ausgebildet ist.

Ein derartiges Innenverkleidungsteil ist z. B. mit DE 44 18 172 A1 beschrieben. Dieses Innenverkleidungsteil ist als eine Armaturentafel ausgebildet, welche im wesentlichen aus einem mit einer schaumstoffbeschichteten Folie kaschierten Träger (Trägerschicht) besteht, in dem eine integrale Abdeckung für einen Airbag vorgesehen ist. Die Abdeckung ist dabei durch eine am Träger umlaufend ausgebildete Fuge markiert. Damit die Folie beim Kaschieren nicht in die Fuge zwischen der Abdeckung und dem Träger gelangt, ist die Fuge sehr schmal (weniger als 1,5 mm) ausgebildet. Eine solche Lösung ist jedoch aufwendig in der Herstellung, da zur Erleichterung des Durchtritts des Airbags im Gefahrenfall die Folie im Bereich der Fuge mit einer dickenreduzierten eingeprägten Rille versehen werden muß.

Durch eine solche dickenreduzierende Rille können aber auf der Oberfläche der Armaturentafel bzw. der Folie, insbesondere im Bereich der Fuge, örtliche Einsenkungen oder Einfallstellen entstehen, die allgemein - seien es nur Schattenbildungen oder Lichtbrechungen - als störend empfunden werden. Solche Einsenkungen oder Einfallstellen können auch durch örtliche Oberflächenspannungen im Bereich der Fuge verursacht werden.

US 5527574 A offenbart ein Innenverkleidungsteil gemäß dem Oberbegriff des Anspruchs 1.

Der Erfindung liegt daher die Aufgabe zugrunde, die erwähnten Innenverkleidungsteile mit einfachen Mitteln zu verbessern.

Diese Aufgabe wird erfindungsgemäß durch die Merkmale des Anspruchs 1 gelöst. Vorteilhafte Ausgestaltungen und Weiterbildungen der Erfindung sind in den Unteransprüchen angegeben.

Wesentliche Vorteile dieser Ausbildung bestehen darin, daß die durch Herstellung der Fuge bzw. Schwächungslinie entstandenen und auf die Folie in diesem Bereich einwirkenden Gewichts- bzw. Spannungskräfte von der Stützeinlage aufgenommen bzw. ausgeglichen werden. Die Bildung von Einsenkungen bzw. Einfallstellen entlang der Fuge bzw. Schwächungslinie wird somit vermieden. Durch die Anordnung einer solchen Stützeinlage ist es auch möglich, die Fuge bzw. Schwächungslinie relativ tief in die Folie einzuarbeiten, so daß die dadurch markierte Abdeckung nur über einen schmalen Steg mit der umliegenden Armaturentafel verbunden ist. Dies ermöglicht ein sicheres Aufreißen der Folie entlang der Markierung durch den aktivierten Airbag, ohne daß relativ große Folienpartikel unkontrolliert aus der Armaturentafel gerissen werden und freifliegend durch ihre hohe Geschwindigkeit die Fahrzeuginsassen gefährden können.

Nachstehend werden einige Ausführungsbeispiele der Erfindung anhand der Zeichnung näher erläutert. Es zeigen
- Fig. 1:: eine räumliche Ansicht eines als Armaturentafel eines Kraftfahrzeuges ausgebildeten Innenverkleidungsteils, mit einer Abdeckung für eine Airbag-Vorrichtung auf der Beifahrerseite;
- Fig. 2:: einen vergrößerten Schnitt gemäß Linie **A-A** in Figur 1, mit einer im Bereich der die Abdeckung markierenden Fuge zwischen der schaumstoffbeschichteten Folie und dem Träger angeordneten Stützeinlage;
- Fig. 3 bis Fig. 6:: alternative Ausbildungen der Stützeinlage gemäß Figur 2.

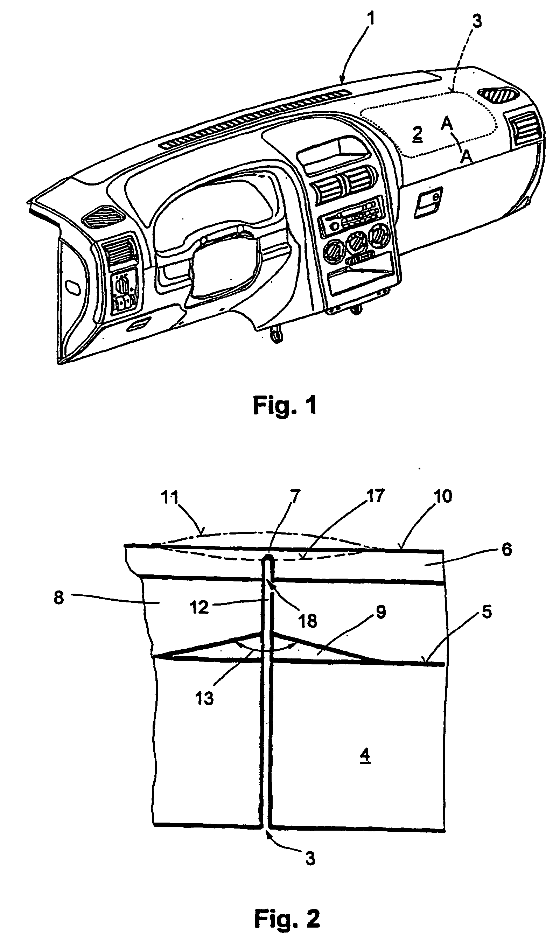

Fig. 1 zeigt eine Armaturentafel 1 eines Kraftfahrzeuges, welche auf der rechten Seite (im Bereich eines Beifahrersitzes) eine integral mit der Armaturentafel 1 ausgebildete Abdeckung 2 für eine unterhalb der Armaturentafel 1 angeordnete Airbag-Vorrichtung aufweist. Die Abdeckung 2 ist durch eine auf der Rückseite der Armaturentafel 1 angeordnete und dadurch vom Innenraum des Kraftfahrzeuges her nicht sichtbare Fuge 3 markiert.

Der Aufbau der Armaturentafel 1 ist in Fig. 2 dargestellt. Wie daraus ersichtlich, besteht sie aus einem geformten Träger 4, welcher annähernd über die gesamte Verbindungsfläche 5 mit einer schaumstoffbeschichteten Folie 6 kaschiert ist. Im Bereich der Abdeckung 2 ist zu deren Markierung auf der Rückseite der Armaturentafel 1 die Fuge 3 eingearbeitet, welche sich etwa - bis auf einen schmalen, eine Aufreißlinie 18 in der Folie 6 bildenden Steg 7 - über die gesamte Höhe bzw. Dicke der Armaturentafel 1 erstreckt . Eine solche Fuge 3 kann beispielsweise durch einen Laserstrahl dosierter Intensität hergestellt werden.

Zwischen der Schaumstoffschicht 8 der Folie 6 und dem Träger 4 ist eine Stützeinlage 9 vorgesehen, welche vor dem Kaschieren des Trägers 4 entsprechend dem Verlauf der Fuge 3 auf die Verbindungsfläche 5 gelegt oder mit dieser durch beispielsweise Kleben verbunden wird. An dieser Stelle entsteht zunächst nach dem Kaschieren des Trägers 4 auf der Oberfläche 10 der Armaturentafel 1 bzw. der Folie 6 eine leichte Auswölbung 11, welche sich nach dem Herstellen der Fuge 3 durch eine Absenkung bzw. einen Einfall der Folie 6 in den Fugenraum 12 wieder auflöst, so daß eine glatte Oberfläche 10 entsteht.

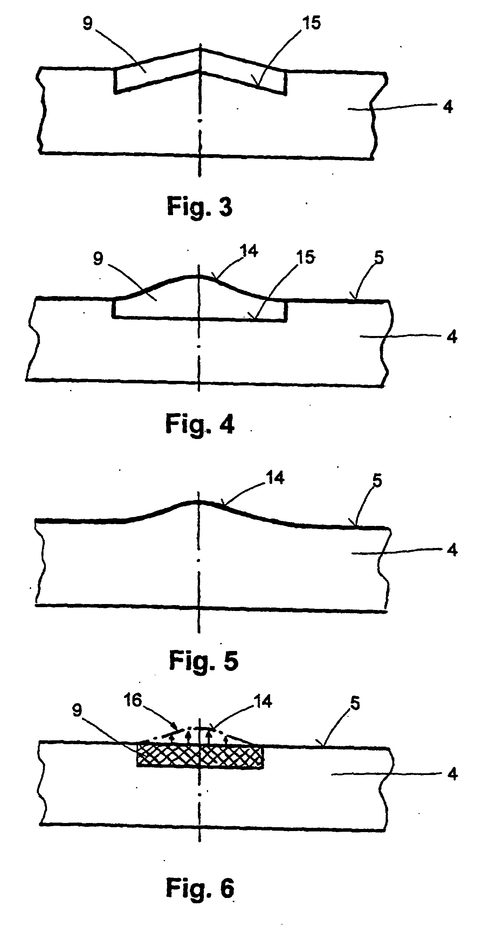

Die Stützeinlage 9 ist bei dieser Ausführung durch ein relativ hartes Kunststoffmaterial gebildet und symmetrisch zu der Fuge 3 angeordnet. Sie kann einteilig oder mehrteilig ausgebildet sein und beispielsweise - wie in Fig. 2 und Fig. 3 dargestellt - eine vom Träger 4 weggerichtete und sich unter einem stumpfen Winkel 13 zuspitzende Form aufweisen. Die Stützeinlage 9 kann auch gemäß den Weiterbildungen nach Fig. 4 bis Fig. 6 mit einer vom Träger 4 weggerichteten Wölbung 14 ausgebildet sein, wobei der Übergang zwischen der Wölbung 14 und der Verbindungsfläche 5 des Trägers 4 gleichmäßig gestaltet ist.

Die Form einer solchen Stützeinlage 9 hängt im wesentlichen von der Art der Herstellung der Fuge 3, dem Material der Folie 6 und ihrem Tiefziehgrad sowie der Dicke und der Elastizität der Schaumstoffschicht 8 ab. Diese Merkmale bzw. Eigenschaften müssen auf das Maß der Einsenkungen 17 (Fig. 2) bzw. des Folieneinfalls, welche nach der Herstellung der Fuge 3 entstehen, abgestimmt werden, damit die fertiggestellte Armaturentafel 1 eine ebene Oberfläche 10 aufweist.

Die Stützeinlage 9 kann auf unterschiedliche Arten am Träger 4 angeordnet sein. Sie kann beispielsweise gemäß Fig. 3 bzw. Fig. 4 formschlüssig am Träger 4 aufgenommen sein. Dazu sind an der Verbindungsfläche 5 des Trägers 4 entlang der Fuge 3 geeignete Formnuten 15 ausgebildet, welche gleichzeitig eine Positionierung der Stützeinlage 9 gegenüber dem Träger 4 ermöglichen.

Die Stützeinlage 9 kann in einer Alternative, die nicht Teil der Erfindung ist, zu den genannten Ausbildungen gemäß Fig. 5 einteilig mit dem Träger 4 ausgebildet sein, wenn diese durch integriertes Formpressen oder durch Spritzgießen des Materials des Trägers 4 gebildet ist. Eine derartige Stützeinlage 9 ist einfach herzustellen. Sie bietet auch den Vorteil, daß sie bei Bedarf durch mechanische Bearbeitung wieder entfernt werden kann, um eine Armaturentafel 1 ohne eine Abdeckung 2 zu schaffen.

Eine weitere alternative Ausführung der Stützeinlage 9 besteht - wie in Fig. 6 dargestellt - darin, daß die Stützeinlage 9 aus einem durch Wärmeeinwirkung expandierenden Werkstoff gebildet ist, welcher durch die bei der Herstellung der Fuge 3 erzeugte Wärme in die expandierte Form 16 überführbar ist. Mit dieser Ausführung ist es möglich, die gleiche Armaturentafel 1 für Kraftfahrzeuge mit oder ohne einer Airbag-Vorrichtung zu verwenden. Erst durch die wärmeerzeugende Herstellung der Fuge 3 wird die zur Bildung einer ebenen Oberfläche 10 notwendige Stützeinlage 9 gebildet.

## Patentansprüche

1. Innenverkleidungsteil, insbesondere für ein Kraftfahrzeug, welches im wesentlichen aus einer oberen Dekorschicht, einer elastischen bzw. nachgiebigen Zwischenschicht und einer formstabilen Trägerschicht besteht, wobei zum Markieren einer integral ausgebildeten Abdeckung für eine Airbag-Vorrichtung zumindest in der Trägerschicht eine Fuge, Schwächungslinie oder dergleichen ausgebildet.ist, und wobei zwischen der Dekorschicht (6) bzw. der Zwischenschicht (8) und der Trägerschickt (4) eine zumindest abschnittsweise entlang der Fuge (3) bzw. Schwächungslinie angeordnete Stützeinlage (9) vorgesehen ist, **dadurch gekennzeichnet, dass** die Trägerschicht (4) zur formschlüssigen Aufnahme der Stützeinlage (9) mit einer entsprechenden Formnut (15) oder -ausnehmung versehen ist.

2. Innenverkleidungsteil nach Anspruch 1, welches als eine Armaturentafel ausgebildet ist, die im wesentlichen aus einem durch Holzfaserform- oder Kunststoff gebildeten und mit einer schaumstoffbeschichteten Folie kaschierten Träger besteht, **dadurch gekennzeichnet, dass** die Stützeinlage (9) im Bereich der Fuge (3) bzw. Schwächungslinie ihre größte Höhe bzw. Dicke aufweist, welche derart bemessen ist, dass nach der Herstellung der Fuge (3) bzw. Schwächungslinie keine sichtbaren Einsenkungen (17), Rillen oder Erhebungen auf der Oberfläche (10) der Folie (6) entstehen.

3. Innenverkleidungsteil nach Anspruch 1 oder 2, **dadurch gekennzeichnet, dass** die Stützeinlage (9) mit einer vom Träger (4) weggerichteten Wölbung (14) ausgebildet ist, wobei der Übergang zwischen der Wölbung (14) und der Verbindungsfläche (5) des Trägers (4) gleichmäßig gestaltet ist.

4. Innenverkleidungsteil nach Anspruch 1 oder 2, **dadurch gekennzeichnet, dass** die Stützeinlage (9) im Bereich der Fuge (3) bzw. Schwächungslinie eine vom Träger (4) weggerichtete und sich unter einem stumpfen Winkel (13) zuspitzende Form aufweist.

5. Innenverkleidungsteil nach einem der Ansprüche 1 bis 4, **dadurch gekennzeichnet, dass** die Stützeinlage (9) einen gegenüber der Fuge (3) bzw. Schwächungslinie symmetrischen Querschnitt aufweist.

6. Innenverkleidungsteil nach einem der Ansprüche 1 bis 5, **dadurch gekennzeichnet, dass** die Stützeinlage (9) aus einem durch Wärmeeinwirkung expandierenden Werkstoff gebildet ist, welcher durch die bei der Herstellung der Fuge (3) bzw. Schwächungslinie erzeugte Wärme in die expandierte Form (16) überführbar ist.

7. Innenverkleidungsteil nach einem der Ansprüche 1 bis 6, **dadurch gekennzeichnet, dass** die Fuge (3) bzw. Schwächungslinie durch einen Laserstrahl dosierter Intensität hergestellt ist.

8. Innenverkleidungsteil nach einem der Ansprüche 1 bis 7, **dadurch gekennzeichnet, dass** durch die Fuge (3) bzw. Schwächungslinie eine Aufreißlinie (18) an der Folie (6) gebildet ist.

9. Innenverkleidungsteil nach Anspruch 8, **dadurch gekennzeichnet, dass** die Aufreißlinie (18) auf der für den Insassen nicht sichtbaren Seite der Folie (6) ausgebildet ist.

## Claims

1. Interior trim portion, in particular for a motor vehicle, which essentially consists of an upper decorative layer, a resilient or flexible intermediate layer, and a dimensionally stable substrate layer, wherein a gap, weak line or the like is formed at least in the substrate layer for marking an integrally formed cover for an airbag device, and wherein between the decorative layer (6) or intermediate layer (8) and the substrate layer (4) is provided a supporting inlay (9) arranged in at least one section along the gap (3) or weak line, **characterised in that** the substrate layer (4) is provided with a corresponding shaped groove (15) or recess for receiving the supporting inlay (9) in form-locking relationship.

2. Interior trim portion according to claim 1, which is constructed as an instrument panel which essentially consists of a substrate formed by wood-fibre moulded material or plastic and backed with a foam-coated film, **characterised in that** the supporting inlay (9) in the region of the gap (3) or weak line has its maximum height or thickness which is such that, after production of the gap (3) or weak line, no visible depressions (17), grooves or projections arise on the surface (10) of the film (6).

3. Interior trim portion according to claim 1, **characterised in that** the supporting inlay (9) is constructed with a curvature (14) pointing away from the substrate (4), wherein the junction between the curvature (14) and the joining surface (5) of the substrate (4) is rendered uniform.

4. Interior trim portion according to claim 1 or 2, **characterised in that** the supporting inlay (9) in the region of the gap (3) or weak line has a shape pointing away from the substrate (4) and tapering at an obtuse angle (13).

5. Interior trim portion according to any of claims 1 to 4, **characterised in that** the supporting inlay (9) has a cross-section which is symmetrical relative to the gap (3) or weak line.

6. Interior trim portion according to any of claims 1 to 5, **characterised in that** the supporting inlay (9) is formed from a material which expands under the action of heat and which can be converted to the expanded shape (16) by the heat generated during production of the gap (3) or weak line.

7. Interior trim portion according to any of claims 1 to 6, **characterised in that** the gap (3) or weak line is produced by a laser beam of measured intensity.

8. Interior trim portion according to any of claims 1 to 7, **characterised in that** by the gap (3) or weak line a tear-open line (18) is formed at the film (6).

9. Interior trim portion according to claim 8, **characterised in that** the tear-open line (18) is formed on the side of the film (6) not visible to the passenger.

## Revendications

1. Elément de revêtement intérieur, en particulier pour un véhicule automobile, composé essentiellement d'une couche supérieure décorative, d'une couche intermédiaire élastique respectivement souple et d'une couche support indéformable, dans lequel une jointure, une ligne d'affaiblissement ou similaire est formée au moins dans la couche support pour marquer un recouvrement intégral d'un dispositif d'airbag, et dans lequel on prévoit une gamiture support (9) entre la couche décorative (6) ou la couche intermédiaire (8) et la couche support (4), disposée au moins par sections le long de la jointure (3) respectivement de la ligne d'affaiblissement, **caractérisé en ce que** la couche support (4) est munie d'une rainure de moulage (15) ou d'un évidement de moulage pour loger la garniture support (9) par complémentarité de forme.

2. Elément de revêtement intérieur selon la revendication 1, lequel est formé comme tableau de bord, composé essentiellement d'un support formé par moulage en fibre de bois ou en plastique et contrecollé avec un film recouvert de mousse, **caractérisé en ce que** la garniture support (9) présente, dans la zone de la jointure (3) respectivement de la ligne d'affaiblissement, sa plus grande hauteur ou largeur, laquelle est mesurée de telle sorte qu'après avoir réalisé la jointure (3) respectivement la ligne d'affaiblissement, il n'y a aucun creux (17), ni nervure ni élévation visible sur la surface (10) du film (6).

3. Elément de revêtement intérieur selon la revendication 1 ou 2, **caractérisé en ce que** la garniture support (9) est formée par une courbure (14) détournée du support (4), la transition entre la courbure (14) et la surface de liaison (5) du support (4) étant réalisée de manière régulière.

4. Elément de revêtement intérieur selon la revendication 1 ou 2, **caractérisé en ce que** la garniture support (9) présente, dans la zone de la jointure (3) respectivement de la ligne d'affaiblissement, une forme détournée du support (4) et augmentant sous un angle (13) obtus.

5. Elément de revêtement intérieur selon l'une quelconque des revendications 1 à 4, **caractérisé en ce que** la garniture support (9) présente une section symétrique par rapport à la jointure (3) respectivement à la ligne d'affaiblissement.

6. Elément de revêtement intérieur selon l'une quelconque des revendications 1 à 5, **caractérisé en ce que** la garniture support (9) est formée dans une matière expansive sous l'effet de la chaleur, laquelle peut être transformée dans la forme expansée (16) par la chaleur créée lors de la réalisation de la jointure (3) respectivement de la ligne d'affaiblissement.

7. Elément de revêtement intérieur selon l'une quelconque des revendications 1 à 6, **caractérisé en ce que** la jointure (3) respectivement la ligne d'affaiblissement est réalisée par rayon laser d'intensité dosée.

8. Elément de revêtement intérieur selon l'une quelconque des revendications 1 à 7, **caractérisé en ce qu'**une ligne de déchirure (18) est formée sur le film (6) par la jointure (3) respectivement la ligne d'affaiblissement.

9. Elément de revêtement intérieur selon la revendication 8, **caractérisé en ce que** la ligne de déchirure (18) est formée sur le côté du film (6) non visible par les occupants.
